# EUROPEAN PATENT SPECIFICATION

(11) **EP 1 428 709 B1**
(45) Date of publication and mention of the grant of the patent: **16.02.2011**
(21) Application number: 03028420.2
(22) Date of filing: 11.12.2003
(51) Int. Cl.: B60J 5/10

(54) **A split tailgate assembly for a motor vehicle**
Eine geteilte Heckklappen-Vorrichtung für ein Motorfahrzeug
Un assemblage en deux parties pour hayon de véhicule automobile

(30) Priority: 12.12.2002 IT TO20021079
(43) Date of publication of application: 16.06.2004
(73) Proprietor: ELASIS SOCIETA' CONSORTILE PER AZIONI, 80038 POMIGLIANO D'ARCO (NA) (IT)
(72) Inventor: Molina, Giuseppe, 10029 Villastellone Torino (IT); Bigando, Mauro, 10136 Torino (IT)
(74) Representative: Fioravanti, Corrado

(56) References cited:
- EP-A- 1 065 083
- PATENT ABSTRACTS OF JAPAN vol. 2002, no. 10, 10 October 2002 (2002-10-10) & JP 2002 160529 A (MAZDA MOTOR CORP), 4 June 2002 (2002-06-04)
- PATENT ABSTRACTS OF JAPAN vol. 2003, no. 08, 6 August 2003 (2003-08-06) & JP 2003 118377 A (MAZDA MOTOR CORP), 23 April 2003 (2003-04-23)

## Description

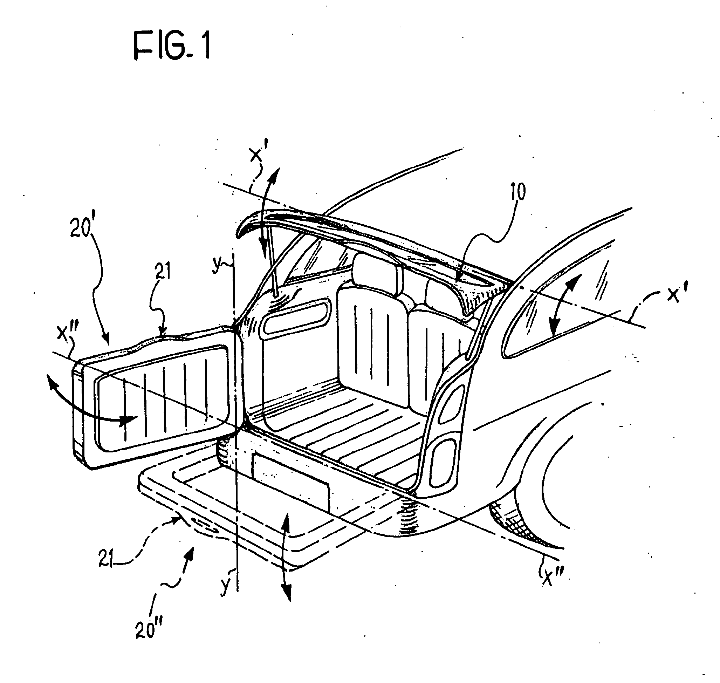

The present invention relates to a two-part split tailgate assembly, of a type illustrated schematically in Figure 1 of the appended drawings.

With reference to Figure 1, an upper portion 10 of the tailgate is pivoted on the vehicle about an upper horizontal axis x'; a lower portion 20' of the tailgate is pivoted on the vehicle about a vertical axis y. Tailgate assemblies are also known in the art in which the lower portion 20'' is pivoted on the vehicle about a lower horizontal axis x'', parallel to the pivot axis x' of the upper portion 10 of the tailgate.

Usually, a sealing strip is fixed to the upper edge 21 of the lower portion 20', 20'' to exert a sealing action against the upper portion 10 when the upper portion 10 and the lower portion 20', 20'' of the tailgate assembly are adjacent one another in a configuration closing the luggage compartment of the vehicle. This sealing action occurs at the moment the tailgate is closed as a result of the compression of a tubular portion of the sealing strip between the upper portion 10 and the upper edge 21 of the lower portion 20', 20".

In either case, in order to open the lower portion 20' or 20'' of the tailgate, it is necessary first to open and lift the upper portion 10, which is closed and bearing against the sealing strip fixed to the upper edge 21 of the lower portion of the tailgate.

JP 2002 160529 A discloses a tailgate assembly as defined in the preamble of claim 1.

The object of the present invention is to provide a split tailgate assembly in which it is possible to open either of the two tailgate portions independently of the other and in which, in particular, it is possible to open the lower portion without it first being necessary to open the upper portion, for example in order to place small objects on the floor of the luggage compartment.

This and other objects and advantages, which will be understood better later, are achieved according to the present invention by providing a tailgate assembly for a motor vehicle having the characteristics defined in Claim 1. Preferred embodiments of the invention are described in the dependent Claims.

The structural and operating characteristics of one preferred but non-limitative embodiment of a tailgate assembly according to the invention will now be described with reference to the appended drawings, in which:
Figure 1 is a partial perspective view of a motor car with a split tailgate assembly of a conventional type, shown in its fully open configuration; the broken line illustrates an alternative known arrangement for pivoting the lower portion of the tailgate;
Figure 2 is a partial perspective view of a tailgate assembly according to the invention, in its closed or locked position, with a device operable to enable the upper and lower portions of the tailgate to be opened independently;
Figure 3 is a side view of the device shown in Figure 2, seen in the direction of the arrow III. The reference IN indicates the side towards the inside of the vehicle, while OUT indicates the side towards the outside; the double arrows S and I indicate the movement of the upper and the lower portions of the tailgate, respectively;
Figure 4 is a partial perspective view of the assembly of Figure 2 in an open or unlocked condition; and
Figure 5 is a side view of the device as seen according to arrow V in figure 4; IN designates the side towards the vehicle inside, while OUT indicates the side towards the outside; the double arrows S, I and G indicate the movement of the two upper and lower tailgate portions and of the sealing strip, respectively.

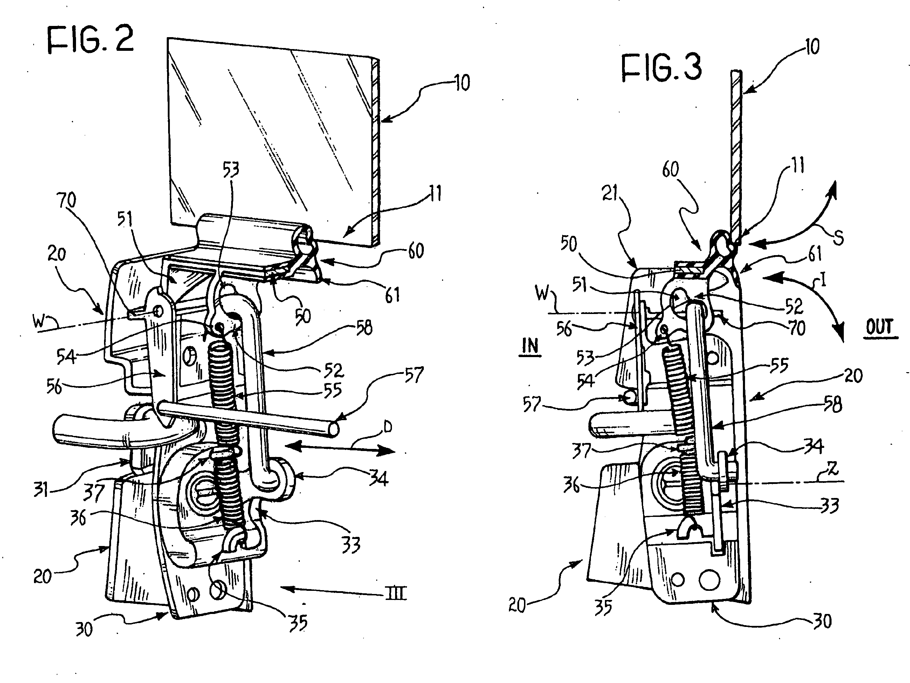

With reference now to Figures 2 to 5, part of the rear windscreen of the upper portion of the tailgate assembly is indicated 10, while part of the lower portion of a split tailgate assembly for a motor car, for example of the type shown in Figure 1, is indicated 20. In the following description, and in the Claims which follow, terms and expressions indicating positions or orientations should be understood as referring to the condition as installed in the vehicle and to the direction of movement thereof, unless instructions are given to the contrary.

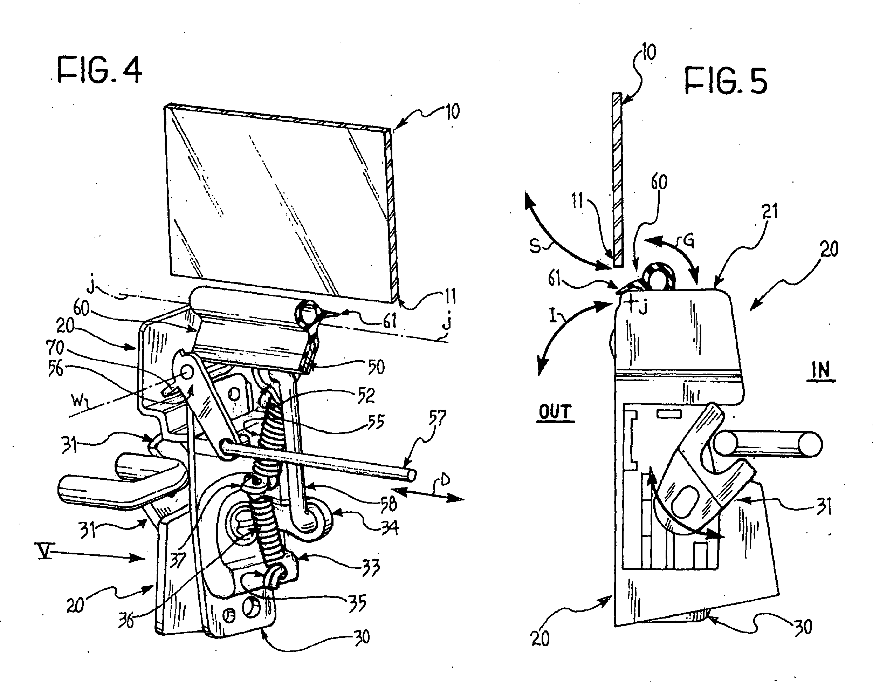

A lock of a known type is fitted to the lower portion 20 of the tailgate, having a body 30 and a rotatable fork element 31 (best seen in Figures 4 and 5), operable to engage one end of a fixed U-shape abutment member 40, fixed to the vehicle body (not shown) for locking the lower tailgate portion 20 in its closed position. On the inner side of the lock, a lever 33 with two arms 34, 35 is pivoted about a substantially horizontal axis of rotation z (Figure 3). The lever 33 is connected, in a manner which is known per se, to the fork 31 in order to rotate it; the branch 35 of the lever 33 is engaged by a coil spring 36 which acts on the lever 33 to return the fork 31 to an angular position of closure in which it engages the fixed abutment 40.

The seal between the two portions 10 and 20' or 20'' of the tailgate is provided by a rubber seal 60 which, according to the invention, is mounted movably on the lower portion 20 of the tailgate. The sealing strip is fixed, for example, by moulding into a transverse rod 50 which extends along the upper edge of the lower tailgate portion 20 and is pivoted onto the tailgate portion by its opposite ends, so it can rotate about an axis j (see Figures 4 and 5) in a vertical plane of rotation.

At the bottom, the transverse member 50 forms a support tooth 51 and a projection 52 with a curved slot 53 formed therein (see Figures 2 and 3). The projection 52 also forms a lug 54 with the upper end of a coil biasing spring 55 fixed thereto, the other end being secured to another lug 37 on the body 30 of the lock. The tooth 51 bears against a support plate 70 pivotable about an axis w (see Figures 2, 3 and 4); this plate is secured to, or formed in one piece with, a control lever 56 pivoted at the bottom on a transverse control rod 57.

The assembly illustrated in Figures 2 to 5 operates as follows.

In the closed configuration, shown in Figures 2 and 3, the upper or window portion 10, typically a pane of glass, lies adjacent the lower portion 20 of the tailgate. The sealing strip 60 is in a raised position, closing the space between the lower edge 11 of the glass pane 10 and the upper edge 21 of the lower portion 20 of the tailgate. The control rod 57 is moved to the left (as shown by the double arrow D in Figure 2) so as to maintain the support plate 70 in a horizontal position and thereby hold the sealing strip 60 tight against the glass pane 10 and in contact with the edge 21 of the lower portion 20 of the tailgate, by means of the tooth 51 and the transverse rod 50. Contact with the lower portion 20' or 20'' of the tailgate is provided by a flap formation 61 which covers the upper edge 21.

Still with the device in its closed position, the rotatable fork 31 of the lock 30 engages the fixed abutment member 40, while the pivotable lever 33 is rotated to a position whereby an arm 34 thereof is raised upwards. The top of a connecting rod 58 engages with clearance the curved slot 53 in the projection 52, while the bottom thereof is pivoted on the arm 34 of the pivotable lever 33.

The action of the coil biasing spring 55, which being under tension tends to draw the projection 52 downwards and to rotate the rod 50 and the seal 60, is countered by the connector rod 58 and by the support plate 70, held in a horizontal position.

In order to open the tailgate, the control rod 56 is controlled to move to the right (as shown by the double arrow D of Figure 4), the support plate 70 is pivoted anticlockwise about the axis w (see Figure 4) and the biasing spring 55 allows the transverse rod 50 to tilt downwards, thus moving the seal 60 into an angular position (lowered position) in which it does not interfere with the upper glass panel 10. In this open or released condition in which the tailgate can be opened, the connector rod 58 engages the upper end of the curved slot 53. The lower portion 20 of the tailgate can thus be opened independently of the upper portion 10, by pivoting it downwards as shown by the arrow I of figure 5.

When the tailgate is being closed, once the lower portion of the tailgate is pivoted upwards once again (arrow I in Figures 3 and 5), the fork 31 strikes the fixed abutment 40 and is caused to pivot, thereby rotating the lever 33 upwards; the connector rod 58, engaged in the top of the curved slot 53, urges the transverse rod 50 upwards, thus returning the seal 30 to the closure position shown in Figure 3. At the same time (it must be made clear), the control rod 57 is shifted to the left (according to the arrow D in Figures 2 and 4), returning the plate 70 to its horizontal position and helping lift the transverse rod 50 by means of the tooth 51.

The split tailgate assembly of the invention thus allows either the upper or the lower of its components, to be opened by pivoting the seal from a raised position to a lowered position at the moment when the lock is released. If the seal were not able to move, as in prior art assemblies, it would block the opening movement of the lower portion, since it is in tight contact with the upper portion. The advantage is clear in the event of it being necessary to open only the lower portion of the tailgate.

## Claims

1. A tailgate assembly for a motor vehicle, of a split type including:
an upper tailgate portion (10) pivoted to the vehicle about a first axis of rotation (x'),
a lower tailgate portion (20', 20") pivoted to the vehicle about a second axis of rotation (y, x") perpendicular or parallel to the first axis (x'),
a resilient seal. (60) extending transversely to provide a seal between the two tailgate portions (10; 20' or 20") when these are adjacent one another in a closed position, wherein the seal (60) is movably mounted to the lower portion (20', 20") of the tailgate and has associated control means for selectively controlling the seal to move between a raised position in which it provides a seal between the two tailgate portions (10; 20' or 20") and a lowered position in which it allows either of the two portions of the tailgate to be opened independently;
**characterised in that** the seal (60) is secured to a transverse rod (50) pivoted about an axis of rotation (j) in a vertical plane of rotation, and that the assembly further includes a biasing spring (55) acting between a part secured to the lower tailgate portion (20' 20") and the transverse rod (50), and tending to bias the seal (60) towards the lowered position.

2. An assembly according to Claim 1, **characterised in that** the said control means are operatively coupled to a lock (30) for locking and unlocking the lower portion of the tailgate.

3. An assembly according to Claim 1, **characterised in that** the transverse rod (50) forms a tooth (51) which bears against a pivotable support plate (70) secured to, or formed in one piece with a control lever (56) pivoted at the bottom on a transverse control rod (57).

4. An assembly according to Claim 2, **characterised in that** the transverse rod (50) forms a projection (52) with a curved slot (53) engaged by a connector rod (58) which is pivoted on a pivotable element (33) in the lock (30).

5. An assembly according to Claim 1, in which the seal (60) includes a tubular portion and also forms a flap portion (61) **characterised in that** it covers or is in contact with the upper edge (21) of the lower portion (20'; 20") of the tailgate.

## Patentansprüche

1. Geteilte Heckklappenanordnung für ein Kraftfahrzeug, die enthält:
einen oberen Heckklappenabschnitt (10), der um eine erste Drehachse (x') drehbar an dem Fahrzeug gelagert ist,
einen unteren Heckklappenabschnitt (20', 20"), der um eine zweite Drehachse (y, x"), senkrecht oder parallel zu der ersten Achse (x') drehbar an dem Fahrzeug gelagert ist,
eine elastische Dichtung (60), die sich in Querrichtung erstreckt und eine Abdichtung zwischen den zwei Heckklappenabschnitten (10; 20' oder 20") bildet, wenn diese in einer geschlossenen Position aneinander grenzen, wobei die Dichtung (60) beweglich an dem unteren Abschnitt (20', 20") der Heckklappe angebracht ist und eine dazugehörige Steuereinrichtung aufweist, mit der die Dichtung selektiv so gesteuert wird, dass sie sich zwischen einer angehobenen Position, in der sie eine Abdichtung zwischen den zwei Heckklappenabschnitten (10; 20' oder 20") bildet, und einer abgesenkten Position bewegt, in der sie zulässt, dass einer der zwei Abschnitte der Heckklappe unabhängig geöffnet wird;
**dadurch gekennzeichnet, dass** die Dichtung (60) an einer Querstange (50) befestigt ist, die um eine Drehachse (j) in einer vertikalen Drehebene drehbar gelagert ist, und dass die Anordnung des Weiteren eine Spannfeder (55) enthält, die zwischen einem Teil, der an dem unteren Heckklappenabschnitt (20' 20") befestigt ist, und der Querstange (50) wirkt und durch die die Dichtung (60) auf die abgesenkte Position zu gespannt wird.

2. Anordnung nach Anspruch 1, **dadurch gekennzeichnet, dass** die Steuereinrichtung funktionell mit einem Schloss (30) zum Verriegeln und Entriegeln des unteren Abschnitts der Heckklappe gekoppelt ist.

3. Anordnung nach Anspruch 1, **dadurch gekennzeichnet, dass** die Querstange (50) einen Zahn (51) bildet, der an einer schwenkbaren Trageplatte (70) anliegt, die an einem Steuerhebel (56), der am unteren Ende einer Quer-Steuerstange (57) drehbar gelagert ist, befestigt oder aus einem Stück mit ihm ausgebildet ist.

4. Anordnung nach Anspruch 2, **dadurch gekennzeichnet, dass** die Querstange (50) einen Vorsprung (52) mit einem gekrümmten Schlitz (53) bildet, in den eine Verbinderstange (58) eingreift, die drehbar an einem schwenkbaren Element (33) in dem Schloss (30) gelagert ist.

5. Anordnung nach Anspruch 1, wobei die Dichtung (60) einen röhrenförmigen Abschnitt enthält und des Weiteren einen Laschenabschnitt (61) bildet, **dadurch gekennzeichnet, dass** er die Oberkante (21) des unteren Abschnitts (20'; 20") der Heckklappe abdeckt oder in Kontakt damit ist.

## Revendications

1. Ensemble de hayon pour un véhicule à moteur, du type en deux parties comprenant :
une partie de hayon supérieure (10) qui pivote sur le véhicule autour d'un premier axe de rotation (x'),
une partie de hayon inférieure (20', 20") qui pivote sur le véhicule autour d'un deuxième axe de rotation (y, x") perpendiculaire ou parallèle au premier axe (x'),
un joint d'étanchéité élastique (60) s'étendant transversalement afin d'assurer une étanchéité entre les deux parties de hayon (10 ; 20' ou 20") quand ceux-ci sont adjacents l'un à l'autre dans une position fermée, le joint d'étanchéité (60) étant monté de façon mobile sur la partie inférieure (20', 20'') du hayon et a des moyens de commande associés destinés à commander de manière sélective le joint d'étanchéité de façon à se déplacer entre une position relevée dans laquelle il assure une étanchéité entre les deux parties de hayon (10 ; 20' ou 20") et une position abaissée dans laquelle il permet à chacune des deux parties du hayon d'être ouverte indépendamment ;
**caractérisé en ce que** le joint d'étanchéité (60) est fixé sur une tige transversale (50) qui pivote autour d'un axe de rotation (j) dans un plan de rotation vertical, et **en ce que** l'ensemble comprend en outre un ressort de rappel (55) agissant entre une partie fixée sur la partie de hayon inférieure (20' 20") et la tige transversale (50), et tendant à rappeler le joint d'étanchéité (60) vers la position abaissée.

2. Ensemble selon la revendication 1, **caractérisé en ce que** lesdits moyens de commande sont reliés de manière opérationnelle à une serrure (30) destinée à bloquer et débloquer la partie inférieure du hayon.

3. Ensemble selon la revendication 1, **caractérisé en ce que** la tige transversale (50) forme une dent (51) qui porte contre une plaque de support pivotante (70) fixée sur, ou formée en une pièce avec un levier de commande (56) qui pivote au niveau du fond sur une tige de commande transversale (57).

4. Ensemble selon la revendication 2, **caractérisé en ce que** la tige transversale (50) forme une saillie (52) avec une fente courbe (53) engagée par une tige de raccordement (58) qui pivote sur un élément pivotant (33) dans la serrure (30).

5. Ensemble selon la revendication 1, dans laquelle le joint d'étanchéité (60) comprend une partie tubulaire et forme une partie de volet (61), **caractérisé en ce qu'**il recouvre ou est en contact avec le bord supérieur (21) de la partie inférieure (20' ; 20") du hayon.
